# EUROPEAN PATENT APPLICATION

(11) **EP 4 130 378 A1**
(43) Date of publication of application: **08.02.2023**
(21) Application number: 21807989.5
(22) Date of filing: 12.03.2021
(51) Int. Cl.: D21F 1/66, C02F 1/50, C02F 1/72

(54) **METHOD FOR SUPPRESSING HYDROGEN SULFIDE PRODUCTION IN WATER TANKS**

(30) Priority: 22.05.2020 JP 2020089436
(71) Applicant: Kurita Water Industries Ltd., Tokyo 164-0001 (JP)
(72) Inventor: KATSURA, Hiroki, Tokyo 164-0001 (JP)
(74) Representative: TBK
(86) International application number: PCT/JP2021/010020
(87) International publication number: WO 2021/235056

(57) **Abstract**

The present invention provides a method for suppressing generation of hydrogen sulfide that can indirectly and preliminarily know the sign of the generation of the hydrogen sulfide in a water tank arranged in a water system of a papermaking equipment, and can effectively suppress the generation of the hydrogen sulfide without excessively adding a treatment agent for treating water (white water) in the water tank. A method for suppressing generation of hydrogen sulfide in a water tank of the present invention includes the steps of: periodically measuring a concentration of a reducing substance serving as a generation source for hydrogen sulfide in water in a water tank arranged in a water system of a papermaking equipment; and performing a predetermined treatment such that the concentration of the reducing substance in the water in the water tank is equal to or less than a reference value when the concentration of the reducing substance is greater than the reference value.

## Description

### TECHNICAL FIELD

The present invention relates to a method for suppressing generation of hydrogen sulfide in a water tank arranged in a water system of a papermaking equipment.

### BACKGROUND ART

Paper production is performed by papermaking using a raw material slurry obtained by dispersing a pulp raw material in water. At this paper production, a pulp is generally adjusted for papermaking in a papermaking step. The step includes a wire part step for dehydrating a paper stock by a filtering function using a wire (net), and a press part step for further dehydrating the paper stock by pressurization to increase density and wet paper strength. In order to clean a felt from the wire, water from a water tank is sprinkled to a wire part and a press part. The water dehydrated from the pulp in the wire part and the press part and the sprinkled water are stored as white water in a white water silo (water storage tank). A part of the white water stored in the white water silo is supplied to a pump, and the remainder is supplied to a seal pit. From the viewpoint of the effective use and reuse of water resources, this white water is used in the circulation of a water system of a renewed papermaking step as dilution water of raw materials.

Papers to be produced, for example, raw materials of paperboards are mainly recycled cardboards and magazines. The cardboards and the magazines contain a large amount of starch that forms a nutrition source for microorganisms, whereby the cardboards and the magazines form the nutrition source for the microorganisms also in a paperboard producing step. When the cardboards and the magazines that serve as raw materials are stored under an environment exposed to wind and rain, the microorganisms are apt to breed.

When the residence time of the white water in the tank such as the water tank or the white water silo becomes longer, a part of a suspended solid contained in the white water floats in water, and the remainder is precipitated and deposited on the bottom part of the tank. In particular, when the water tank is a large-sized water tank storing a large volume of water, or a water tank having an angled bottom part, a sediment is apt to be deposited on the bottom part of the water tank, particularly at a corner part of the bottom part. Thus, when the suspended solid is deposited in the tank to form a residence part (sediment), the deposited amount gradually increases, and oxygen becomes difficult to be supplied into the sediment to form a so-called anaerobic state.

Furthermore, since additive agents such as starch are present as additives in the white water, such additives form a nutrition source, which cause an environment where the anaerobic microorganisms are apt to breed. The microorganisms grow on the surface of a device, and secrete adhesive metabolites to form a biofilm called a slime containing a pulp and a filler. In particular, neutral papermaking causes an environment in which the slime is apt to be generated by the activation of the microorganisms. Under such an environment, the anaerobic microorganisms breed, whereby hydrogen sulfide is apt to be generated. The hydrogen sulfide is poisonous gas that exhibits a pungent odor (putrefied egg smell) and stimulates eyes, skin, and mucous membrane. For this reason, when hydrogen sulfide is generated in factories, the fatal accident of workers is at risk of occurring. In particular, factories that produce paperboards are present in urban areas in many cases for reduction in the cost of distribution of raw materials or products. Therefore, when harmful gases such as hydrogen sulfide are generated, the harmful gases cause an odor problem with respect to residents living near the factories, which make it necessary to take any countermeasure.

Conventional means for eliminating the generating risk of the fatal accident of the workers is as follows. For example, at shutdown (operation stop) of factories, water in a water tank is periodically (for example, every 14 to 30 days) withdrawn. The water tank is opened, and air is then replaced for a long time (for example, about 6 hours). Then, the workers enter the water tank to implement maintenance. However, when the generation amount of the hydrogen sulfide is not sufficiently controlled to be equal to or less than a reference value in operation, the implementation of the maintenance causes the generated hydrogen sulfide to be released into the atmosphere. This makes it impossible to solve the odor problem with respect to the residents living near the factories, which causes a problem of reduction in safety and working efficiency.

Measures against the odor of the gas generated in the factories are considered to be as follows. Symptomatic odor elimination is performed using a masking agent and the like, or the workers go to factories, for example, for every hour from a long distance (separated place) to confirm the effect of a treatment agent, or introduce detection dogs to add the treatment agent if necessary. However, all these methods do not suppress the generation of the hydrogen sulfide itself in the factories, whereby the methods are not sweeping measures. In addition, there is also a problem that the optimization of the usage amount of the treatment agent (slime control agent) added into the white water in the water tank with respect to the slime to be generated cannot be achieved. Furthermore, in order to confirm the addition amount of the treatment agent, the remaining amount of the treatment agent, and the presence or absence of the effect provided by adding the treatment agent, a method in which the workers (for example, workers in three shifts) confirm situations, and records these on daily reports is also considered. However, the method has a problem that it causes an increase in man-hour such as the necessity of performing the correct transfer of the situations among the workers.

As a method for suppressing generation of hydrogen sulfide in a water system of a papermaking equipment, various attempts have heretofore been made.

For example, Patent Document 1 discloses that microorganisms such as sulfate reducing bacteria grown in a waste water treatment tank or the like, particularly in the bottom part (sediment layer) of the waste water treatment tank in which a slurry stagnates are subjected to sterilization or growth suppression, and a known chemical agent (treatment agent) is added to suppress the generation of hydrogen sulfide produced due to the microorganisms.

However, Patent Document 1 (in particular, Table 2) merely discloses the experimental results in which the generation amount of hydrogen sulfide is suppressed after two days and five days by adding a fixed amount (1 kg/day) of the known chemical agent (treatment agent). An appropriate amount of treatment agent according to the concentration variation of the hydrogen sulfide to be generated is not added, and the generation amount of the hydrogen sulfide does not always exceed a reference value merely, whereby a fixed amount of treatment agent greater than the required addition amount by a certain degree is considered to be added.

For this reason, if the sign of the generation of hydrogen sulfide in the water tank arranged in the water system of the papermaking equipment, particularly the water system can be preliminarily known, an appropriate amount of treatment agent can be added without adding an excessive amount of treatment agent, whereby the generation itself of the hydrogen sulfide can be suppressed, and the addition amount of the treatment agent for treating the water (white water) in the water tank can be saved, which is preferable.

### Citation List

### Patent Document

Patent Document 1: Japanese Patent Laid-Open No. 57-158278

### DISCLOSURE OF THE INVENTION

### Problems to be Solved by the Invention

The present invention provides a method for suppressing generation of hydrogen sulfide that can indirectly and preliminarily know the sign of the generation of the hydrogen sulfide in a water tank arranged in a water system of a papermaking equipment, and can effectively suppress the generation of the hydrogen sulfide by adding an appropriate amount of treatment agent for treating water (white water) in the water tank.

### Means for Solving the Problems

As a result of intensive studies of a cause of generation of hydrogen sulfide in a water tank, the present inventors have found that as the concentration of a reducing substance (for example, sulfite ions (SO₃²⁻)) that serves as a generation source for the hydrogen sulfide contained in water (white water) in a water tank starts to increase, the hydrogen sulfide starts to be generated. The present inventors have found that the generation of the hydrogen sulfide can be effectively suppressed by periodically measuring the concentration of the reducing substance (for example, sulfite ions (SO₃²⁻)) that serves as a generation source for the hydrogen sulfide contained in the water in the water tank, and performing a predetermined treatment such that the concentration of the reducing substance in the water in the water tank is equal to or less than a reference value when the concentration of the reducing substance is greater than the reference value, and suitably performing at least one of aeration using an oxygen-containing gas, and addition of a treatment agent (slime control agent), and have completed the present invention.

That is, the main structure of the present invention is as follows.
(1) A method for suppressing generation of hydrogen sulfide in a water tank, the method including the steps of: periodically measuring a concentration of a reducing substance serving as a generation source for hydrogen sulfide in water in a water tank arranged in a water system of a papermaking equipment; and performing a predetermined treatment such that the concentration of the reducing substance in the water in the water tank is equal to or less than a reference value when the concentration of the reducing substance is greater than the reference value.
(2) The method for suppressing generation of hydrogen sulfide in a water tank according to the above (1), wherein the predetermined treatment is a treatment in which at least one of aeration using an oxygen-containing gas, and addition of a slime control agent is performed.
(3) The method for suppressing generation of hydrogen sulfide in a water tank according to the above (2), wherein the aeration using the oxygen-containing gas is performed by adjusting an aeration volume so that the concentration of the reducing substance be equal to or less than the reference value.
(4) The method for suppressing generation of hydrogen sulfide in a water tank according to the above (2) or (3), wherein the addition of the slime control agent is performed by adjusting an addition amount of the slime control agent so that the concentration of the reducing substance be equal to or less than the reference value.
(5) The method for suppressing generation of hydrogen sulfide in a water tank according to any one of the above (1) to (4), wherein the predetermined treatment is performed based on an evaluation result of activity of microorganisms comprehensively evaluated using a water quality analysis value when performing water quality analysis of the water in the water tank, and a measured value of the concentration of the reducing substance.
(6) The method for suppressing generation of hydrogen sulfide in a water tank according to the above (5), wherein the water quality analysis value is at least one measured value of a redox potential, an amount of a sediment, and an amount of a suspended solid in the water in the water tank.
(7) The method for suppressing generation of hydrogen sulfide in a water tank according to any one of the above (1) to (6), wherein the reducing substance is sulfite ions.
(8) The method for suppressing generation of hydrogen sulfide in a water tank according to any one of the above (1) to (7), wherein a concentration of hydrogen sulfide in atmosphere when continuously measured by a hydrogen sulfide concentration meter installed in an upper part of the water tank is in the range of 3 ppm or less.

### Effects of the Invention

According to the present invention, the sign of the generation of hydrogen sulfide in a water tank arranged in a water system of a papermaking equipment can be indirectly and preliminarily known by the concentration variation of a reducing substance (for example, sulfite ions (SO₃²⁻)), and thus an appropriate amount of treatment agent can be stably added into water in the water tank. As a result, the generation of the hydrogen sulfide is effectively suppressed, and thus, for example, a time for air replacement performed before workers enter the water tank at shutdown (operation stop) and conducts maintenance can be shortened, and safety and working efficiency can be remarkably enhanced. The putrefaction of the water (white water) in the water tank can also be effectively suppressed, whereby the number of defects of products (paperboards) decreases, and a period from operation start to shutdown (operation stop) can be extended.

### BRIEF DESCRIPTION OF THE DRAWINGS

Figure 1 is a schematic flow diagram showing one aspect of a papermaking equipment according to the present embodiment.
Figure 2 is an enlarged schematic view showing a partial region of white water containing a sediment present in a white water storage tank (water tank) in order to explain a state where a reducing substance (sulfite ions (SO₃²⁻)) is generated from a sediment deposited on the bottom part of the water tank.
Figure 3 is a diagram illustrating the state of a sediment deposited in a water tank arranged in a water system of a conventional papermaking equipment and the flow F1 of water.
Figure 4 is a diagram illustrating each member constituting a water tank arranged in a water system of a papermaking equipment used for the present embodiment, and the flow F2 of water.
Figure 5 is a view obtained by plotting changes with time in the concentration of sulfite ions and the addition amount of a treatment agent (SC agent) in a bar graph and a line graph when a fixed amount of treatment agent is added for 14 days, without controlling the addition amount of the treatment agent (SC agent) (conventional method), and when the addition amount of the treatment agent (SC agent) is controlled according to variation of the concentration of sulfite ions (the present invention example).
Figure 6 is a graph showing the alteration of reduction of a reducing substance when aerated by an oxygen-containing gas from a conventional method and the increase of a redox potential.

### PREFERRED MODE FOR CARRYING OUT THE INVENTION

Hereinafter, specific embodiments of the present invention will be described in detail, but the present invention is not limited to following embodiments, and appropriate modifications can be made within the scope of the objectives of the present invention.

The present invention is a method for suppressing generation of hydrogen sulfide in a water tank, the method including the steps of: periodically measuring a concentration of a reducing substance serving as a generation source for hydrogen sulfide in water in a water tank arranged in a water system of a papermaking equipment; and performing a predetermined treatment such that the concentration of the reducing substance in the water in the water tank is equal to or less than a reference value when the concentration of the reducing substance is greater than the reference value.

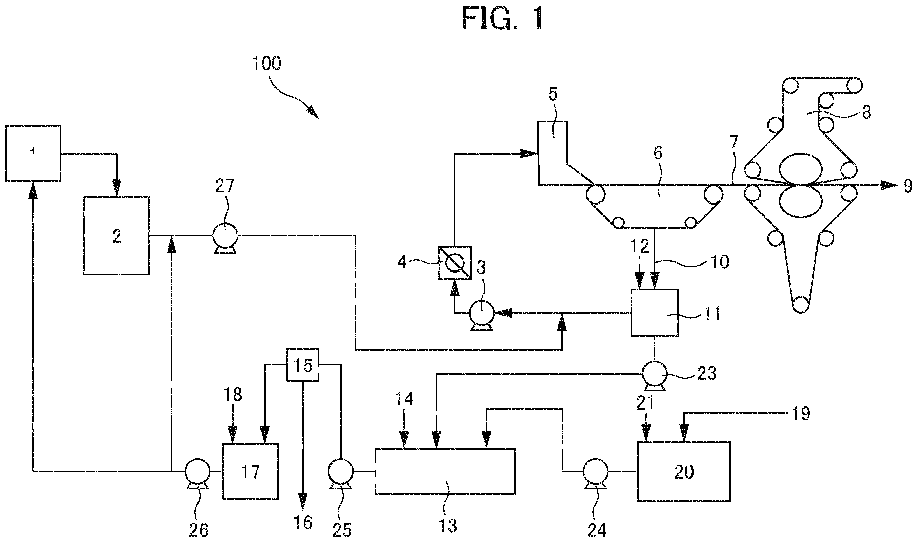

Figure 1 shows one aspect of the schematic structure of a papermaking equipment used for a method for suppressing generation of hydrogen sulfide in a water tank according to the present invention.

A papermaking equipment 100 shown in Figure 1 charges a raw material pulp slurry produced by a raw material producing apparatus 1 into a machine tank 2. The machine tank 2 is a tank storing the raw material pulp slurry, and a fan pump 27 and a fan pump 3 send the raw material pulp slurry to an inlet 5 via a screen 4. Next, the raw material pulp slurry sent to the inlet 5 is supplied to a wire part 6 to be dehydrated. A dehydrated wet sheet 7 is sent to a drier part 9 from a press part 8. White water 10 separated by the wire part 6 is stored in a white water silo 11. A part of white water stored in the white water silo 11 is sent to the inlet 5 with raw materials, and sent also to an excess white water tank 13 via a fan pump 23. The white water sent to the excess white water tank 13 is sent to a solid-liquid separation device 15 via a fan pump 25, and a solid content is discharged, or collected by a raw material system (16). Meanwhile, a filtrate generated in the solid-liquid separation device 15 is mixed with the pulp slurry discharged from the raw material producing apparatus 1 or the machine tank 2 via a fan pump 26, and the mixture is introduced into a white water circulation system. A water system 19 introduced into the white water circulation system is stored in a treated water tank 20, and then introduced into the excess white water tank 13 via a fan pump 24.

Herein, the "water tank" used in the present invention means at least one water tank of a plurality of water tanks arranged in a water system of a papermaking equipment. For example, in the papermaking equipment 100 of Figure 1, at least one water tank of the white water silo 11, the excess white water tank 13, a filtrate tank 17, and the treated water tank 20 corresponds to the water tank used in the present invention.

The "white water" refers to an aqueous solution discharged in a large amount from a papermaking machine or the like in a papermaking step during paper production. The white water typically contains a fine fiber derived from a raw material pulp used during papermaking, and other papermaking chemical agent and the like. The "white water circulation system" refers to white water used with circulation in the papermaking step. "The water system introduced into the white water circulation system" refers to a water system used for the adjustment of the concentration of a pulp slurry or white water, and the like in the white water circulation system. The water system is not particularly limited, and examples thereof include paper production soft water and hard water. The water system may contain a papermaking chemical agent in a small amount within a range that does not deteriorate the effect of the present invention.

In the present invention, by periodically measuring the concentration of the reducing substance serving as a generation source for hydrogen sulfide in the water in the water tank arranged in the water system of the papermaking equipment, and performing a predetermined treatment such that the concentration of the reducing substance in the water in the water tank is equal to or less than a reference value when the concentration of the reducing substance is greater than the reference value, an appropriate amount of treatment agent (for example, slime control agent (SC agent)) can be stably added into the water (white water) in the water tank. As a result, the generation of the hydrogen sulfide can be effectively suppressed.

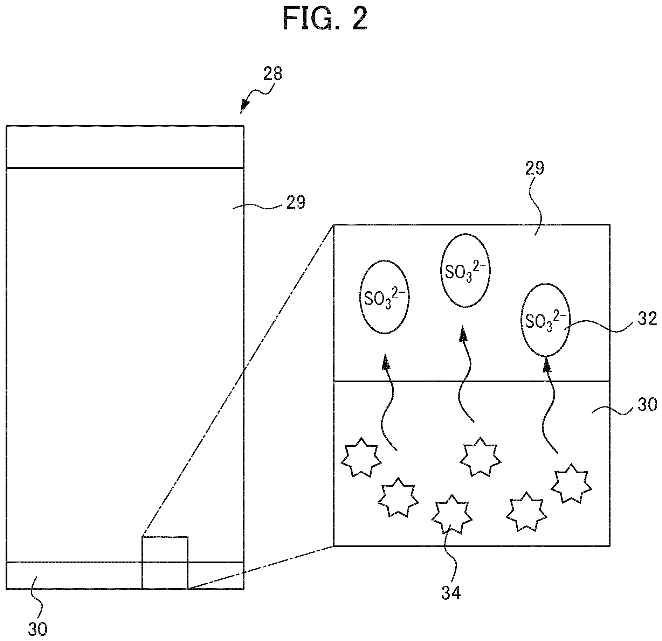

Figure 2 is an enlarged schematic view showing a partial region of white water containing a sediment present in a white water storage tank (water tank) in order to explain a state where a reducing substance (sulfite ions (SO₃²⁻)) is generated from a sediment deposited on the bottom part of the white water storage tank (water tank). In a water tank 28 shown in Figure 2, white water 29 and a residence part 30 formed by a sediment deposited on the bottom part of the water tank 28 are present. When the residence time of the white water present in the water tank 28 is increased, a suspended solid contained in the white water is gradually deposited on the bottom part of the water tank 28 to form the residence part 30. As the sediment that forms the residence part 30 is deposited in a state where it resides on the side surface of the water tank 28 and the same place of the bottom surface, oxygen becomes difficult to be supplied into the sediment, which forms a so-called anaerobic state, whereby anaerobic microorganisms breed. Anaerobic microorganisms 34 are activated, and as shown in an enlarged scale in Figure 2, reducing substances 32 such as sulfite ions (SO_{S}²⁻) are generated in the water by the activated anaerobic microorganisms 34.

The present inventors have focused on variation in the concentration of the reducing substance contained in the water (white water) 29 present in the water tank 28 and serving as the generation source for hydrogen sulfide, for example, sulfite ions (SO₃²⁻), and have found that when the concentration of the reducing substance is greater than a reference value, the hydrogen sulfide (H₂S) tends to be generated from the water tank 28. The present inventors have found that the generation of the hydrogen sulfide in the water tank 28 can be effectively suppressed by periodically measuring the concentration of the reducing substance serving as the generation source for the hydrogen sulfide, for example, sulfite ions (SO_{S}²⁻) in the water (white water) 29 present in the water tank 28, and performing a predetermined treatment such that the concentration of the reducing substance in the water (white water) in the water tank 28 is equal to or less than the reference value, when the concentration of the reducing substance is greater than the reference value, suitably, a treatment in which at least one of aeration using an oxygen-containing gas, and addition of a slime control agent is performed.

### (Aeration Treatment using Oxygen-Containing Gas)

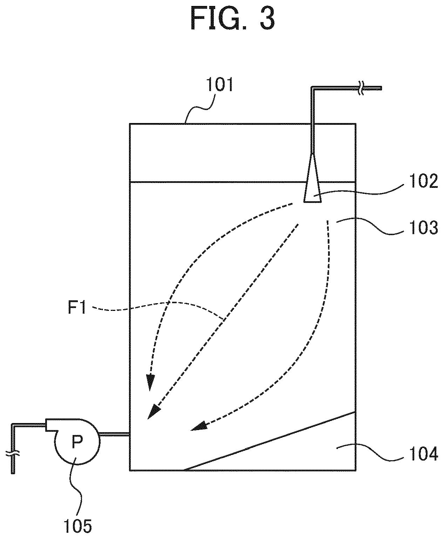

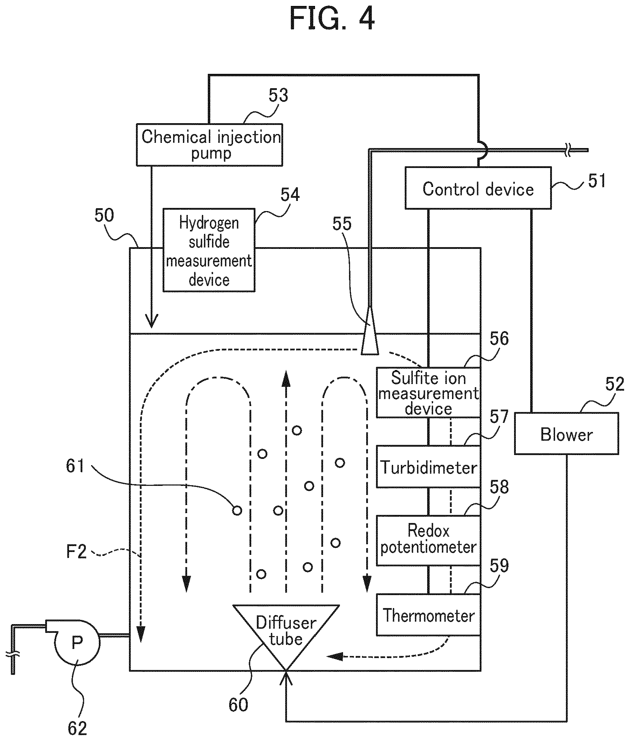

The aeration treatment using the oxygen-containing gas is a treatment in which stirring and aeration are performed by blowing the oxygen-containing gas to the water present in the water tank. Figure 3 is a diagram illustrating the state of a sediment deposited in a water tank arranged in a water system of a conventional papermaking equipment and the flow F1 of water. Figure 4 is a diagram illustrating each member constituting a water tank arranged in a water system of a papermaking equipment used for the present embodiment, and the flow F2 of water. Dashed arrows shown in Figure 3 and Figure 4 show the flowing directions of water, and dashed dotted arrows shown in Figure 4 show the flowing directions of the oxygen-containing gas blown out from the diffuser tube. Solid lines extending from the control device shown in Figure 4 show the flows of communication systems.

A water tank 101 of a conventional papermaking equipment shown in Figure 3 has a so-called circular type device configuration in which water (white water) is supplied into the water tank 101 from a white water inlet 102 provided on the upper part of the water tank 101, and the white water in the water tank 101 is discharged to other water tank and the like via a fan pump 105 arranged on the outer side of the bottom part side of the water tank 101. The flow F 1 of water as shown in Figure 3 occurs to a certain extent, but an aeration treatment using an oxygen-containing gas is not performed.

For this reason, in the water tank 101 of the conventional papermaking equipment, white water 103 present in the water tank is not sufficiently stirred in many cases, whereby a suspended solid containing a filler or the like is typically precipitated as shown in Figure 3, and deposited on the bottom part of the water tank. In particular, when the water tank is a large-sized water tank storing a large volume of water, or a water tank having an angled bottom part, a sediment is apt to be deposited on the bottom part of the water tank, particularly a corner part of the bottom part. Thus, when the suspended solid is deposited in the tank to form a residence part 104, the deposited amount gradually increases, whereby oxygen becomes difficult to be supplied into the sediment to form a so-called anaerobic state.

Meanwhile, a water tank 50 of the papermaking equipment shown in Figure 4 has a so-called circular type device configuration in which water (white water) is supplied into the water tank 50 from a white water inlet 55 provided in the upper part of the water tank 50, and the white water in the water tank 50 is discharged to other water tank and the like via a fan pump 62 provided on the outer side of the bottom part side of the water tank 50. For example, an aerator (diffuser tube) 60 is provided in the water tank, so that an aeration treatment using the oxygen-containing gas is also performed. Therefore, the residence part 104 as shown in Figure 3 is less likely to be formed, whereby the breeding of the microorganisms is less likely to occur. Furthermore, by performing the aeration treatment using the oxygen-containing gas, the concentration of dissolved oxygen in the water (white water) is increased, and the sulfite ions (SO_{S}²⁻) in the water (white water) are likely to be oxidized to sulfate ions (SO₄²⁻) to cause a redox potential to change in a positive direction. As a result, the generation of the hydrogen sulfide (H₂S) can be effectively suppressed.

The aeration using the oxygen-containing gas is preferably performed by adjusting the aeration volume so that the concentration of the reducing substance be equal to or less than the reference value. Since the redox potential can be shifted (changed) to the positive potential side by adjusting the aeration volume according to the concentration variation of the reducing substance in the water tank, an anaerobic state is less likely to be formed, whereby the generation of the hydrogen sulfide can be further suppressed.

Herein, the "oxygen-containing gas" may be a gas containing oxygen, and is not particularly limited. Examples thereof include an oxygen (O₂) gas alone, and a gas mixture containing oxygen such as air. Of these, from the viewpoint of availability, the gas mixture is preferred, and the air is more preferred. Nitrogen and carbon dioxide and the like as a gas other than oxygen may be contained in the gas mixture. One type of the oxygen-containing gas may be used alone, or two or more types thereof may be used in combination. Specific examples of the "reducing substance serving as a generation source for hydrogen sulfide" include sulfite ions (SO_{S}²⁻) and thiosulphate ions (S₂O₃²⁻).

As a method for aerating the water in the water tank, as shown, for example, in Figure 4, it is preferable that an aeration device such as the aerator (diffuser tube) 60 is arranged on the bottom part of the water tank, and air is blown into the water to aerate the water such that air bubbles 61 are formed in the water in the water tank. In particular, the use of the aerator 60 as the aeration device makes it possible to stably and continuously aerate the water, is inexpensive, and has a small cost load, which is preferable. When a sediment associated with the flow of water in the water tank is apt to be generated, aeration devices are preferably installed at a plurality of places in the tank.

With respect to the aerator (diffuser tube) 60, the air bubbles 61 are preferably discharged in a state where an outlet of the air bubbles of the air is turned upward from the bottom part of the tank in view of enhancing the contact efficiency of oxygen and water (in particular, deposited suspended solid). The diffuser tube is not particularly limited, and examples thereof include a diffuser tube having an exhaust port with a caliber diameter of 1 mm or more and 5 mm or less. One diffuser tube or a plurality of diffuser tubes can also be used. When the plurality of diffuser tubes are used, such exhaust ports are arranged, for example, at an interval of 5 cm or more and 50 cm or less.

The position of the diffuser tube is not particularly limited as long as it is a position at which oxygen-containing gas is blown into the water present in the tank, and the diffuser tube may be provided at least one place inside and outside the tank. When the diffuser tube is provided in the tank, the position of the diffuser tube in the tank is not also particularly limited, and at least one diffuser tube preferably discharges the air bubbles upward from the bottom part of the tank as described above to blow the oxygen-containing gas.

For example, when the diffuser tube is horizontally installed in the tank, the horizontal air bubbles injected from the diffuser tube are preferably blown at a moving speed of about 180 cm/s toward a wall surface in the tank. This blown air collides against the opposite wall surface along with the rising action of the air bubbles to produce strong upward and downward flows of about 30 cm/s. This upward flow arrives at a water surface in the tank, changes to a horizontal flow, and stirs the water in the tank. Meanwhile, the generated downward flow changes to a flow that strongly washes away the bottom surface of the water tank, which makes it possible to strongly stir the inside of the water tank. Therefore, the water can be continuously fluidized without a sediment being deposited on the bottom part of the water tank.

For example, when the diffuser tube is installed on the bottom part in the tank, the air discharged from the aerator (diffuser tube) 60 is preferably blown at a moving speed of about 180 cm/s upward into the water in the water tank. This blown air serves as a strong upward flow, and then reaches at the water surface to change to a strong horizontal flow. This horizontal flow collides against the wall surface in the tank to produce a strong downward flow of about 30 cm/s. The downward flow changes to a flow that strongly washes away the bottom surface of the water tank, which makes it possible to strongly stir the inside of the water tank. Therefore, the water can be continuously fluidized without a sediment being deposited on the bottom part of the water tank.

When the diffuser tube is provided on the bottom part of the water tank, a blowing amount by the diffuser tube is not particularly limited, and for example, the blowing amount is preferably 0.5 m³/hour or more and 10 m³/hour or less per the unit bottom area (1 m²) of the tank per one diffuser tube. By blowing the oxygen-containing gas in such a blowing amount, stirring and aeration can be efficiently performed, and the activation of the anaerobic microorganisms can be suppressed.

The oxygen-containing gas may be continuously or intermittently blown. When the oxygen-containing gas is intermittently blown, a time for blowing the oxygen-containing gas per one blowing is not particularly limited, and is 3 min or more and 30 days or less, and preferably 4 min or more and 20 days or less. The time for blowing the oxygen-containing gas is 3 min or more, whereby oxygen can be sufficiently supplied to the water (in particular, deposited suspended solid). Even when the time for blowing the oxygen-containing gas is greater than 30 days, the oxygen can be sufficiently supplied to the water, but an effect corresponding to the time cannot be achieved. A time for stopping the blowing of the oxygen-containing gas is not particularly limited, and is 3 min or more and 30 days or less, and preferably 4 min or more and 20 days or less.

The aeration volume by the diffuser tube is not particularly limited, and the aeration volume with respect to 1 m² of the unit bottom area of the aeration tank is preferably 0.5 m³/hour or more and 10 m³/hour or less, and more preferably 0.5 m³/hour or more and 8 m³/hour or less. When the aeration volume is within the above range, the oxygen tends to be able to be sufficiently supplied to the water system. When the aeration volume is greater than the upper limit, a facility on a larger scale may be necessary. When the aeration volume is less than the lower limit, the aeration may be insufficient.

The aeration volume by the diffuser tube that can set the concentration of the reducing substance (for example, sulfite ions (SO₃²⁻)) in the water tank to be equal to or less than a predetermined reference value (for example, 5 mg/L) is preferably 0.1 m³/hour or more and 10 m³/hour or less, more preferably 0.5 m³/hour or more and 10 m³/hour or less, and still more preferably 0.5 m³/hour or more and 5 m³/hour or less.

Also, the aeration time with the oxygen-containing gas is not particularly limited, and is typically 3 min or more and 30 days or less, and preferably 4 min or more and 20 days or less. When the aeration time is within the above range, oxygen tends to be able to be sufficiently supplied to the water system. When the aeration time is greater than the upper limit, the production cost may increase. When the aeration volume is less than the lower limit, the aeration may be insufficient. The aeration may be performed either continuously, or several times intermittently.

With respect to an exemplary aerating method, an aeration tank having a diffuser tube on the bottom part thereof is used in the aeration in the aeration step, with the aeration volume by the diffuser tube with respect to 1 m² of the unit bottom area of the aeration tank being 0.5 m³/hour or more and 10 m³/hour or less.

### (Treatment by adding Slime Control Agent (SC Agent))

The predetermined treatment may be a treatment in which a treatment agent (slime control agent) is added, and is more preferably performed by adjusting the addition amount so that the concentration of the reducing substance is equal to or less than the reference value. By adding the slime control agent, the number of microorganisms (bacteria) in the white water present in the water tank can be reduced, and as a result, the generation of the slime can be suppressed. This makes it possible to prevent the putrefaction of the water, whereby the generation of the hydrogen sulfide in the water tank can be effectively suppressed. The slime control agent suppresses the degradation of organic matters such as starch contained in the white water, whereby the generation of the slime can also be suppressed.

The slime control agent is not particularly limited, and examples thereof include an organic antimicrobial agent and an inorganic antimicrobial agent.

The organic antimicrobial agent is not particularly limited, and examples thereof include methylene bisthiocyanate, 5-chloro-2-methyl-4-isothiazolin-3-one, 2-methyl-4-isothiazolin-3-one, 4,5-dichloro-2-n-octylisothiazolin-3-one, 1,2-benzoisothiazolin-3-one, 2-n-octylisothiazolin-3-one, sodium dimethyldithiocarbamate, 2,2-dibromo-3-nitrilopropionamide, 2-bromo-2-bromomethylglutaronitrile, 2-bromo-2-nitropropane-1,3-diol, 2,2-dibromo-2-nitroethanol, 1,1-dibromo-1-nitro-2-propanol, 1,1-dibromo-1-nitro-2-acetoxyethane, 1,1-dibromo-1-nitro-2-acetoxypropane, 2-bromo-2-nitro- 1,3-diacetoxypropane, tribromonitromethane, β-bromo-β-nitrostyrene, 5-bromo-5-nitro-1,3-dioxane, 5-bromo-2-methyl-5-nitro-1,3-dioxane, 1,2-bis(bromoacetoxy)ethane, 1,2-bis(bromoacetoxy)propane, 1,4-bis(bromoacetoxy)-2-butene, methylene bisbromoacetate, benzyl bromoacetate, N-bromoacetamide, 2-bromoacetamide, dichloroglyoxime, α-chlorobenzaldoxime, α-chlorobenzaldoxime acetate, 2-(p-hydroxyphenyl)glyoxylohydroximoylchloride, triiodoallyl alcohol, 5-chloro-2,4,6-trifluoroisophthalonitrile, 2,4,5,6-tetrachloroisophthalonitrile, 3,3,4,4-tetrachlorotetrahydrothiophene-1,1-dioxide, 4,5-dichloro-1,2-dithiol-3-one, hexabromodimethyl sulfone, glutaraldehyde, orthophthalaldehyde, dichlorophen, and a quaternary ammonium salt.

Of these, 2,2-dibromo-3-nitrilopropionamide, and 2,2-dibromo-2-nitroethanol are preferred since a higher antimicrobial effect can be expected.

The inorganic antimicrobial agent is not particularly limited, and examples thereof include hypochlorites such as sodium hypochlorite, potassium hypochlorite, calcium hypochlorite and barium hypochlorite, chlorine dioxide, chlorinated isocyanuric acid, and a chlorine-bound compound.

Of these, sodium hypochlorite and a chlorine-bound compound that have appropriate oxidizability and have low reactivity with dissolved organic matters are preferred.

The chlorine-bound compound is obtained by reacting a chlorine donor that releases free chlorine with any one of ammonia, an ammonium salt and an organic nitrogen compound in an adequate condition. The chlorine donor is not particularly limited, and sodium hypochlorite is preferred. The ammonium salt is not particularly limited, and ammonium halides such as ammonium chloride and ammonium bromide, ammonium sulfate, and ammonium nitrate and the like are preferred. The organic amine is preferably sulfamic acid or urea or the like.

Although the chlorine-bound compound can also be produced in accordance with known methods, "Fuzzicide (trade name)" (manufactured by Kurita Water Industries Ltd.) may be commercially available. "Fuzzicide" is a 1:1 reaction product (molar ratio) of ammonium bromide and sodium hypochlorite.

One type of the slime control agent may be used alone, or two or more types thereof may be used in combination. Also, the slime control agent may be added once, or may be divided into aliquots and added several times.

The adding method of the slime control agent to the water system is not particularly limited, and the slime control agent may be directly added, or the slime control agent may be dissolved or dispersed in a solvent for use as a solution. The solvent is not particularly limited, and examples thereof include water, an organic solvent, and a mixed solvent thereof.

The addition amount of the slime control agent to the water system is not particularly limited, and in terms of the solid content equivalent, the amount is typically 0.1 mg/L or more and 1000 mg/L or less, and preferably 1 mg/L or more and 100 mg/L or less. When the concentration is within the above range, the generation of the slime tends to be capable of being sufficiently suppressed. When the concentration is greater than the upper limit, the production cost may be increased. When the concentration is less than the lower limit, the generation of the slime may not be suppressed.

The addition amount of the slime control agent that can set the concentration of the reducing substance (for example, sulfite ions (SO₃²⁻)) in the water tank to be equal to or less than a predetermined reference value (for example, 5 mg/L) is preferably 0.1 mg/L or more and 100 mg/L or less, more preferably 0.1 mg/L or more and 50 mg/L or less, and still more preferably 1 mg/L or more and 10 mg/L or less.

### (Combined Treatment of Aeration Treatment using Oxygen-Containing Gas and Addition of Slime Control Agent)

The predetermined treatment is more preferably performed using the aeration using the oxygen-containing gas and the addition of the slime control agent (SC agent) in combination. In the case that the sediment deposited on the bottom part in the water tank forms an anaerobic state, when the predetermined treatment is a treatment performed by only the addition of the slime control agent without performing aeration, anaerobic microorganisms breed to increase the amount of generation of a reducing substance such as sulfite ions (SO₃²⁻) in the water. Since many of the slime control agents are oxidants, these react with sulfite ions derived from a reducing substance such as hydrogen sulfide or mercaptan from microorganisms before reacting with the microorganisms, and many of them are consumed before exhibiting a desired antibacterial effect. A part of the slime control agent added for a slime treatment is consumed by the reaction with the generated reducing substance. As a result, it may be necessary to add the slime control agent in an amount greater than an amount required for the slime treatment.

Therefore, in such a case, by using the aeration using the oxygen-containing gas and the addition of the slime control agent in combination, the sulfite ions can be oxidized to sulfate ions or the like by oxygen in the oxygen-containing gas. Much oxygen-containing gas dissolves in the white water in the water tank, whereby the partial pressure of the reducing substance such as hydrogen sulfide can decrease to reduce the solubility of the reducing substance. As a result, the concentration of the reducing substance such as the sulfite ions (SO_{S}²⁻) in the water in the water tank can be reduced. As a result, most of the slime control agent added for the slime treatment is used for the slime treatment, which makes it possible to reduce the addition amount of the slime control agent to a necessary minimum amount.

### <Measurement of Concentration of Reducing Substance>

In the measurement of the concentration of the reducing substance in the water tank, sulfite ions measurement device 56 that measures the concentration of the sulfite ions (SO_{S}²⁻) as the reducing substance serving as a generation source for hydrogen sulfide in the water in the water tank is installed at a position in the water tank so as to be immersed in the water (white water) in the water tank, to periodically (for example, every 1 hour) measure the concentration of the sulfite ions (SO_{S}²⁻) in the water (white water) in the water tank. The measured concentration of the sulfite ions (SO_{S}²⁻) is transmitted to a control device 51 via communication means and the like. When the numerical value of the transmitted concentration of the sulfite ions (SO_{S}²⁻) is greater than a predetermined reference value, the control device 51 may send an indication to a chemical injection pump 53 such that the concentration of the reducing substance in the water in the water tank is equal to or less than the reference value to supply an appropriate amount of treatment agent (slime control agent) into the water tank. This also allows the workers to perform remote control at a place separated from the water tank, whereby the number of times of the workers going to the water tank can also be reduced.

In a method for determining the reference value of the concentration of the reducing substance (for example, sulfite ions (SO₃²⁻)), for example, a calibration curve of the concentration of the sulfite ions in the water in the water tank and the concentration of hydrogen sulfide discharged from the water tank may be previously prepared, and the concentration of the reference value of the sulfite ions may be determined from the calibration curve. Therefore, based on the reference value of the concentration of the reducing substance in the water in the water tank, the addition amount of the slime control agent and the aeration volume of the oxygen-containing gas can be determined.

The concentration of the sulfite ions is preferably adjusted to 5.0 mgSO₃²⁻/L or less, and more preferably 2.0 mgSO₃²⁻/L or less. When the concentration of the sulfite ions is in the above range, the concentration of the sulfite ions in the white water is sufficiently reduced, whereby the generation of the hydrogen sulfide from the water tank can be suppressed to 3 ppm or less.

### (Other Predetermined Treatment)

Furthermore, it is preferable that the activity of the microorganisms is comprehensively evaluated using a water quality analysis value when the water quality analysis of the water in the water tank is performed, and a measured value of the concentration of the reducing substance, and the predetermined treatment is performed based on the evaluation results of the activity of the microorganisms.

### <Water Quality Analysis>

A parameter related to the water quality analysis value in the white water storage tank for evaluating the activity of the microorganisms is not particularly limited, and may be appropriately selected according to the situation of the water system in which the method of the present invention is conducted. The parameter related to the water quality analysis value is preferably selected from the group consisting of a redox potential, an amount of glucose, an organic acid amount, pH, an amount of calcium ions, an electrical conductivity, turbidity, a cationic demand, a temperature, a degree of foaming, COD (chemical oxygen demand), BOD (biochemical oxygen demand), DO (an amount of dissolved oxygen), an amount of starch, an amount of residual chlorine, and a respiration rate. In particular, at least one of a redox potential, an amount of a sediment, and an amount of a suspended solid is more preferably used as a measured value. The parameter related to the water quality analysis value is continuously measured.

### [Measurement of Redox Potential]

The redox potential is a parameter reflecting an anaerobic or aerobic state in the water system, and as the redox potential is lower, the slime is likely to be formed. As the measured value of the redox potential is lower, the treatment level of sterilization (for example, addition of an oxidizing disinfectant) or bacteriostasis (for example, cooling to water) is increased, and as the measured value is higher, the treatment level of sterilization or bacteriostasis is reduced.

The measuring method of the redox potential is not particularly limited, and examples thereof include potentiometry and potentiometric titration.

At least one redox potentiometer may be arranged in the water in the white water storage tank to measure the redox potential of the water in the tank. The number of the redox potentiometers is not particularly limited, and as the number is larger, the redox potential can be more correctly measured. For example, the number of the redox potentiometers to be provided in the height direction of the tank is preferably 3 or more, more preferably 4 or more, and still more preferably 5 or more. The number of the redox potentiometers to be provided in the height direction of the tank may be, for example, 1000 or less, 500 or less, 100 or less, 50 or less, 20 or less, or 10 or less.

As shown in Figure 4, a redox potential in a water tank 50 may be continuously or intermittently detected by a redox potentiometer 58. The obtained electric signals and data may be continuously or intermittently transmitted to a control device 51, a computer, a data logger, and a sequencer and the like through a wire or by wireless, to record changes with time thereof.

The redox potential is typically adjusted to -150 mV or more, and preferably -100 mV or more and 500 mV or less. The activity of the microorganisms in the storage tank can be predicted by the alteration of the redox potential. When oxygen in the system is consumed along with increasing foul with microorganisms, the redox potential is likely to be lowered. However, when the redox potential is within the above range, the amount of oxygen in the white water circulation system is sufficient, whereby the generation of the slime tends to be able to be effectively suppressed. When the redox potential is greater than the upper limit, the amount of oxygen in the white water circulation system may be unnecessarily excessive. When the redox potential is less than the lower limit, the suppression of the generation of the slime may fail.

### [Measurement of Amount of Sediment]

An ultrasonic sensor is used for measuring the amount of the sediment. An ultrasonic wave is gradually decreased while being transmitted. When a boundary at which physical properties (acoustic impedance) change is present on the way of the propagation path, a part of the ultrasonic wave is reflected at the boundary, and transmitted in the opposite direction. This phenomenon is used, and the ultrasonic sensor is arranged at the water surface or at the vicinity thereof to irradiate the direction of the bottom part of the tank with the ultrasonic wave from the water surface. The reflected wave is detected by the ultrasonic sensor. A place at which the suspended solid is deposited is different in physical properties from normal water, which makes it possible to distinguish between the place at which the suspended solid is deposited and a place at which the suspended solid is not deposited. At least this detection result may be obtained one-dimensionally in the height direction of the tank, or two-dimensionally as an image analysis result. Thus, the result obtained using the ultrasonic sensor is obtained by reflecting the actual sediment in the tank with high accuracy, and can detect the existence state of the suspended solid (in particular, deposition state) with high accuracy even as compared with other methods. In particular, the two-dimensional image analysis result can detect the existence state of the suspended solid (in particular, deposition state) with higher accuracy.

The number of the ultrasonic sensors is not particularly limited, and the number of the ultrasonic sensors to be provided may be any number of 1 or more, but at least one ultrasonic sensor is provided to allow the measurement,

### [Measurement of Amount of Suspended Solid]

A method for detecting the change with time of the existence state of the suspended solid is not particularly limited, and examples thereof include a method using at least one of a thermometer, a turbidimeter, an MLSS meter (mixed liquor suspended solids), an ultrasonic sensor, and a straight pipe. Of these, a method using at least one of a thermometer, a turbidimeter, and an ultrasonic sensor is preferred, and a method using at least a turbidimeter is more preferred.

In the case that the suspended solid is deposited on the bottom part of the tank when using a turbidimeter 57 as shown in Figure 4, turbidity increases at the place, and increases as compared with a higher place at which no suspended solid is deposited. Then, the height of the tank or the height of the water (liquid height) (or half height thereof, one over several of height) is divided into equal parts (for example, 2 or more). At the places (heights), the turbidimeters 57 are arranged so as to be linearly aligned to each other in the height direction. At this time, all the plurality of turbidimeters arranged in the height direction are arranged so as to be oriented in the same direction in the horizontal direction (plane direction perpendicular to the height direction of the tank). All the plurality of turbidimeters arranged in the height direction measures turbidities at the same time. Thereby, the presence of the suspended solid can be detected at a place at which at least turbidity is remarkably higher than that on the upper side (for example, higher by 30% than the value of the turbidimeter immediately above).

The number of the turbidimeters 57 is not particularly limited as long as the number of the turbidimeters 57 to be provided is at least two in the height direction of the layer. Since the increased number allows more accurate measurement, for example, the number of the turbidimeters 57 to be provided in the height direction of the tank is preferably 3 or more, more preferably 4 or more, and still more preferably 5 or more. The number of the turbidimeters in the height direction of the tank may be, for example, 1000 or less, 500 or less, 100 or less, 50 or less, 20 or less, or 10 or less.

These detections may be continuously or intermittently performed. The obtained electric signals and data may be continuously or intermittently transmitted to the control device 51, the computer, the data logger, and the sequencer and the like through a wire or by wireless to record changes with time thereof.

Another examples thereof include a method for measuring turbidity while moving the turbidimeter along the height direction of the tank in addition to the provision of the plurality of turbidimeters in the height direction of the tank.

### [Measurement of Concentration of Hydrogen Sulfide]

The sign of the generation of the hydrogen sulfide can be preliminarily known by a reducing substance (for example, sulfite ions (SO₃²⁻)) and the above-mentioned water quality continuous measurement, whereby measures can be taken before an odor problem is actualized.

As shown in Figure 4, the concentration of the hydrogen sulfide generated in an air layer is measured by a hydrogen sulfide measurement device 54. The installation place of the hydrogen sulfide measurement device 54 is not particularly limited, and in order to be able to quickly correspond to the generation of the hydrogen sulfide by the breeding of sulfate reducing bacterium, the hydrogen sulfide measurement device 54 is preferably installed near a place in which the breeding of the sulfate reducing bacterium is apt to occur, or in the upper part of the water tank in which a sediment is apt to be generated.

The concentration of the hydrogen sulfide is measured using the hydrogen sulfide measurement device. For example, a hydrogen sulfide concentration meter (GHS-8AT) manufactured by Gastec Corporation is used. The measurement principle of the measurement device to be used is constant-potential electrolytic. This measurement device is installed in the upper part of the water tank to continuously measure the concentration of the hydrogen sulfide.

In the present embodiment, an undetected concentration of the pungent odor of hydrogen sulfide in the atmosphere when continuously measured by the device for measuring the hydrogen sulfide generated in the water tank is 3 ppm or less, and more preferably 1 ppm or less.

As described thus far, in the present embodiment, the sign of the generation of the hydrogen sulfide in the water tank arranged in the water system of the papermaking equipment can be indirectly and preliminarily known by the concentration variation of the reducing substance (for example, sulfite ions (SO₃²⁻)), and thus an appropriate amount of treatment agent can be stably added into water in the water tank. As a result, the generation of the hydrogen sulfide is effectively suppressed, and thus, for example, a time for air replacement performed before workers enter the water tank at shutdown (operation stop) and conduct maintenance can be shortened, and safety and working efficiency can be remarkably enhanced. Further, the putrefaction of the water (white water) in the water tank can also be effectively suppressed, whereby the number of defects of products (paperboards) decreases, and a period from operation start to shutdown (operation stop) can be extended. In addition, in the present embodiment, water quality deterioration in the white water tank is eliminated. This enhances the fixing rate of functional paper chemicals such as a paper reinforcing agent and a coagulant with respect to a pulp fiber, and as a result, COD in drainage water is reduced, which also provides a secondary effect of reducing the load of the drainage treatment.

### EXAMPLES

Hereinafter, the present invention will be specifically described with reference to Examples, but is not limited thereto.

### [Test Example]

White water in a cylindrical excess white water tank provided in a papermaking equipment and having a height of 4 m and a diameter of 4 m was continuously aerated by air of 2 m³/hour per unit area of 1 m² for the bottom area of a tank per one diffuser tube, using a plurality of diffuser tubes installed at intervals on a water layer bottom part and each having a caliber diameter of 2 mm. First, the excess white water tank was cleaned, and operation was started from a state where a sediment was completely removed. At the point of time at which 14 days elapsed from the start, the operation was once stopped, and the inside of the tank was cleaned for 1 day and then reoperation was performed (for 15 days) from the state where the sediment was completely removed. The operation was stopped again after a lapse of 30 days from the first start.

### [Example]

Example was performed in the same manner as in Test Example except that the inside of the water tank was subjected to an aeration treatment and the addition of a slime control agent (SC agent) was controlled at the point of time at which the concentration of sulfite ions obtained by water quality analysis was greater than 2 mg/L over 16 days from the start of reoperation, after the inside of a system was cleaned.

As a device used for continuous measurement of the present Example, K-9602 Titrimetric Slfite manufactured by Chemetrics was used as a sulfite ion measurement device, and TRX-98 manufactured by Toko Kagaku CO., LTD. was used for measurement as a redox potentiometer. GHS-8AT manufactured by Gastec Corporation was used for measurement as a hydrogen sulfide measurement device.

### [Conventional Example]

Conventional Example was performed in the same manner as in Example except that a fixed amount (6 kg/day) was added for 14 days from operation start without controlling the addition of a slime control agent (SC agent) associated with the concentration variation of sulfite ions.

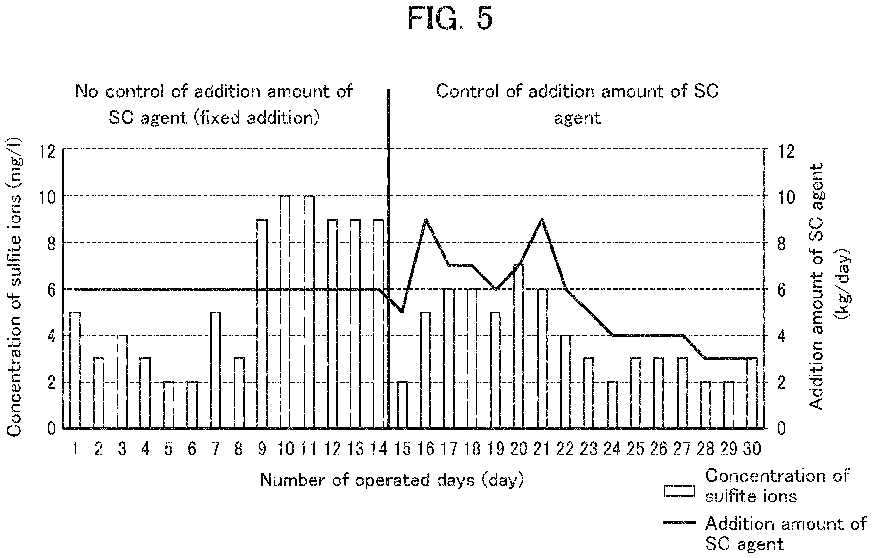

Figure 5 is a graph comparing conventional change with time of the generation of sulfite ions when a slime control agent (SC agent) was added in a fixed amount without controlling the addition of the slime control agent with change with time when the present invention was conducted. The control of the slime control agent (SC agent) was observed after 15th day from reoperation at shutdown (operation stop). Here, when a fixed amount of slime control agent (SC agent) was added on 14th day (conventional method) from operation start, a remarkable increase in sulfite ions was observed after 9th day from the operation start. From this, it is inferred that dirt or a sediment was accumulated on a tank bottom in a water tank, and microorganisms were activated to generate a reducing substance.

Specifically, when a fixed amount (6 kg/day) of slime control agent (SC agent) was continuously added in a method of Conventional Example (for 14 days from operation start to 14th day), the concentration of the sulfite ions was confirmed to greatly vary between 2 mg/L and 10 mg/L.

Meanwhile, when the concentration of the sulfite ions was greater than a standard of 2 mg/L in the method of Example (for 16 days from 15th day to 30th day), a predetermined treatment was performed. The addition amount of the slime control agent (SC agent) was controlled in a range of 3 kg/day to 9 kg/day according to concentration of the sulfite ions, and the concentration of the sulfite ions was suppressed to a range of 2 mg/L to 7 mg/L as compared with the method of Conventional Example.

In particular, in the method of Example, the concentration of the sulfite ions could be suppressed to 3 mg/L on 30th day as the final day, and the total addition amount of the slime control agent for 16 days was smaller by 20% than that in the method of Conventional Example.

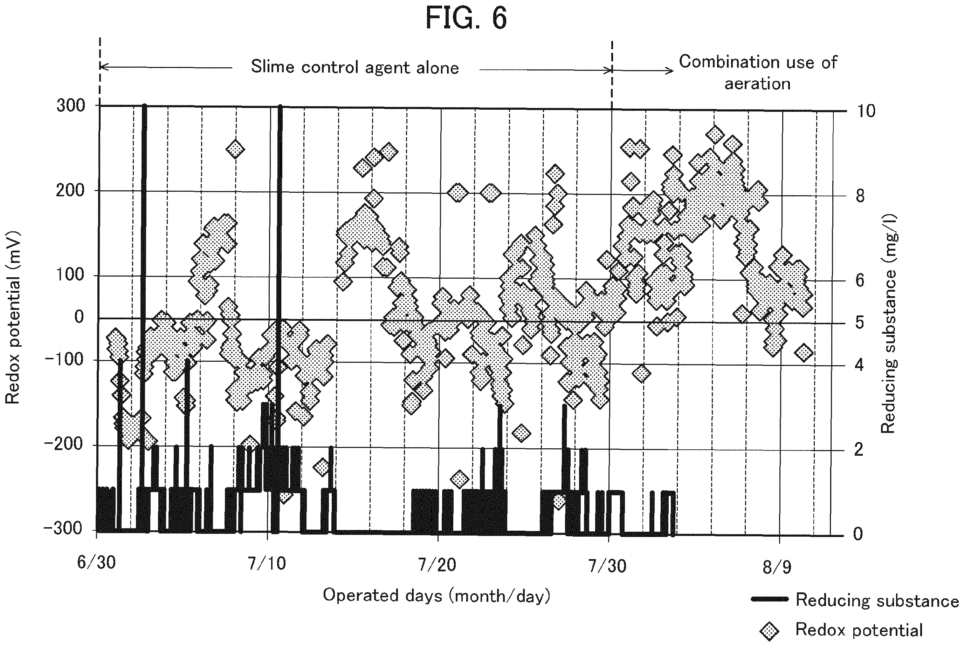

Furthermore, Figure 6 is a graph showing the increase of a redox potential and the change of reduction of a reducing substance when aerated by an oxygen-containing gas from a conventional method.

Specifically, in the method of Conventional Example, in the operation period (6/30 to 7/30), a redox potential varied in a wide range of -250 mV to +250 mV when a treatment was performed by adding only a fixed amount (6 kg/L) of slime control agent (SC agent). In particular, the redox potential was also observed to vary to a potential more negative than -100 mV that is in an anaerobic state. In this period, the concentration of the reducing substance (sulfite ions) was confirmed to increase to up to a maximum of 10 mg/L.

Meanwhile, when the measurement was performed while the slime control agent (SC agent) and the aeration volume of the oxygen-containing gas were controlled in the operation period (after 7/30) in the method of Example, the redox potential was confirmed to be a positive potential of 0 mV or more in most of the operation period, and to shift (change) to a positive potential side. In this operation period, the concentration of the reducing substance (sulfite ions) was suppressed to 1 mg/L or less.

Furthermore, Table 1 shows the results of measuring the concentration of hydrogen sulfide generated from the water tank when the operation was stopped after performing operation for the same operation period (for 1 month) in the method of Conventional Example and the method of Example. In the method of Conventional Example and the method of Example, an air replaceable time after withdrawing water in the water tank after the operation stop until entering the water tank, and the number of defects of produced paper products were also evaluated, and shown in Table 1. The number of defects of the paper products is shown by an index ratio when the number of defects of paper products produced in the method of Conventional Example is taken as 100. As the index ratio is smaller, the paper products have more excellent quality.

**[Table 1]**

| | Conventional Example | Example |
|---|---|---|
| Concentration of hydrogen sulfide generated when inside of water tank is opened | 5 ppm | 1 ppm or less |
| Time until entering water tank during maintenance | 6 hours | 3 hours |
| Number of defects of paper products (index ratio) | 100 | 80 |

From the results shown in Table 1, in the method of Conventional Example, the concentration of hydrogen sulfide generated from the water tank measured after the operation stop was 5 ppm. By contrast, in the method of Example, it is found that the concentration of hydrogen sulfide generated from the water tank measured after the operation stop was significantly as low as 1 ppm or less, and the generation of the hydrogen sulfide was suppressed. For this reason, in the method of Example, an air replaceable time until entering the water tank during the maintenance was 3 hours, and was shortened to one half of the air replaceable time (6 hours) of the method of Conventional Example. Furthermore, it is found that the number of defects of the paper products in the method of Example was 80, and smaller than 100 of the method of Conventional Example.

### Reference Signs List

1: raw material producing apparatus
2: machine tank
3: fan pump
4: screen
5: inlet
6: wire part
7: wet sheet
8: press part
9: drier part
10: white water
11: white water silo (or water tank)
12, 14, 18, 21: treatment agent (or slime control agent (SC agent))
13: excess white water tank (or water tank)
15: solid-liquid separation device
16: discharge solid content or collect solid content into raw material system
17: filtrate tank (or water tank)
19: water system introduced into white water circulation system
20: treated water tank (or water tank)
23, 24, 25, 26, 27: fan pump
28: water tank
29: white water
30: residence part (or sediment)
32: reducing substance (or sulfite ions)
34: anaerobic microorganisms
50: water tank
51: control device
52: blower
53: chemical injection pump
54: hydrogen sulfide measurement device
55: white water inlet
56: sulfite ion measurement device
57: turbidimeter
58: redox potentiometer
59: thermometer
60: aerator (or diffuser tube)
61: air bubbles
62, 105: fan pump
100: papermaking equipment
101: water tank
102: white water inlet
103: white water
104: residence part (or sediment)

## Claims

1. A method for suppressing generation of hydrogen sulfide in a water tank,
the method comprising the steps of:
periodically measuring a concentration of a reducing substance serving as a generation source for hydrogen sulfide in water in a water tank arranged in a water system of a papermaking equipment; and
performing a predetermined treatment such that the concentration of the reducing substance in the water in the water tank is equal to or less than a reference value when the concentration of the reducing substance is greater than the reference value.

2. The method for suppressing generation of hydrogen sulfide in a water tank according to claim 1, wherein the predetermined treatment is a treatment in which at least one of aeration using an oxygen-containing gas, and addition of a slime control agent is performed.

3. The method for suppressing generation of hydrogen sulfide in a water tank according to claim 2, wherein the aeration using the oxygen-containing gas is performed by adjusting an aeration volume so that the concentration of the reducing substance be equal to or less than the reference value.

4. The method for suppressing generation of hydrogen sulfide in a water tank according to claim 2 or 3, wherein the addition of the slime control agent is performed by adjusting an addition amount of the slime control agent so that the concentration of the reducing substance be equal to or less than the reference value.

5. The method for suppressing generation of hydrogen sulfide in a water tank according to any one of claims 1 to 4, wherein the predetermined treatment is performed based on an evaluation result of activity of microorganisms comprehensively evaluated using a water quality analysis value when performing water quality analysis of the water in the water tank, and a measured value of the concentration of the reducing substance.

6. The method for suppressing generation of hydrogen sulfide in a water tank according to claim 5, wherein the water quality analysis value is at least one measured value of a redox potential, an amount of a sediment, and an amount of a suspended solid in the water in the water tank.

7. The method for suppressing generation of hydrogen sulfide in a water tank according to any one of claims 1 to 6, wherein the reducing substance is sulfite ions.

8. The method for suppressing generation of hydrogen sulfide in a water tank according to any one of claims 1 to 7, wherein a concentration of hydrogen sulfide in atmosphere when continuously measured by a hydrogen sulfide concentration meter installed in an upper part of the water tank is in the range of 3 ppm or less.
